# EUROPEAN PATENT APPLICATION

(11) **EP 3 671 658 A1**
(43) Date of publication of application: **24.06.2020**
(21) Application number: 18215038.3
(22) Date of filing: 21.12.2018
(51) Int. Cl.: G06T 17/00, G06T 15/20, G06T 19/00

(54) **POSITIONING METHOD AND REALITY PRESENTING DEVICE**

(71) Applicant: XRSpace CO., LTD., Taoyuan City 330 (TW)
(72) Inventor: Chou, Peter, 100 Taipei City (TW); Su, Shang-Chin, 112 Taipei City (TW); Wu, Meng-Hau, 231 New Taipei City (TW); Chu, Feng-Seng, 235 New Taipei City (TW)
(74) Representative: Straus, Alexander

(57) **Abstract**

A positioning method (30), applied in a reality presenting device, includes collecting a plurality of first images (IMG₁) of a real environment (302) and constructing a virtual environment (VEN) corresponding to the real environment according to the plurality of first images (304); obtaining, by a reality presenting device (10), a second image (IMG₂) of the real environment (306); computing an initial virtual position in the virtual environment corresponding to the second image according to the plurality of first images and the second image ; and displaying, by the reality presenting device (10), the virtual environment in a perspective from the initial virtual position at a time which a specific application of the reality presenting device is initiated (310); wherein the initial virtual position is corresponding to an initial real location in the real environment at which the reality presenting device captures the second image.

## Description

### Field of the Invention

The present disclosure relates to a positioning method and a reality presenting device, and more particularly, to a positioning method and a reality presenting device capable of computing an initial virtual position corresponding to a real location.

### Background of the Invention

With the advancement and development of technology, the demand of interactions between a computer and a user is increased. Human-computer interaction technology, e.g. somatosensory games, a virtual reality (VR) environment, an augmented reality (AR) environment, a mixed reality (MR) environment and an extended reality (XR) environment, becomes popular because of its physiological and entertaining function.

Users or players may play games in a virtual environment and the virtual environment may be constructed to emulate a real environment. In the prior art, for the game involving the virtual environment emulating the real environment, the user/player is at a predefined virtual location in a virtual word when the user/player initiates the game, and the virtual location does not have relation with a real location in the real world at which the user/player stands.

### Summary of the Invention

This in mind, the application aims at providing a positioning method and a reality presenting device.

This is achieved by a positioning method, a reality presenting device and a system according to claims 1, 2 and 3. The dependent claims pertain to corresponding further developments and improvements.

As will be seen more clearly from the detailed description following below, an embodiment of the present disclosure discloses a positioning method. The positioning method comprises collecting a plurality of first images of a real environment and constructing a virtual environment corresponding to the real environment according to the plurality of first images; obtaining, by a reality presenting device, a second image of the real environment; computing an initial virtual position in the virtual environment corresponding to the second image according to the plurality of first images and the second image; and displaying, by the reality presenting device, the virtual environment in a perspective from the initial virtual position at a time which a specific application of the reality presenting device is initiated; wherein the initial virtual position is corresponding to an initial real location in the real environment at which the reality presenting device captures the second image.

Another embodiment of the present disclosure discloses a reality presenting device capable of displaying a virtual environment to a user, the virtual environment is constructed based on a plurality of first images captured from a real environment, the reality presenting device. The reality presenting device comprises an image capturing module, configured to capture a second image from the real environment; a processing unit, configured to perform the following steps: constructing the virtual environment corresponding to the real environment according to the plurality of first images; and computing an initial virtual position in the virtual environment corresponding to the second image according to the plurality of first images and the second image; and a displaying screen, configured to display the virtual environment in a perspective from the initial virtual position at a time which a specific application of the reality presenting device is initiated; wherein the initial virtual position is corresponding to an initial real location in the real environment at which the reality presenting device captures the second image.

Another embodiment of the present disclosure discloses a system capable of displaying a virtual environment to a user, the virtual environment is constructed based on a plurality of first images captured from a real environment, the reality presenting device. The system comprises a reality presenting device, comprising an image capturing module, configured to capture a second image from the real environment; and a displaying screen, configured to display the virtual environment in a perspective from an initial virtual position at a time which a specific application of the reality presenting device is initiated; and a remote computing device, configured to perform the following steps: constructing the virtual environment corresponding to the real environment according to the plurality of first images; and computing the initial virtual position in the virtual environment corresponding to the second image according to the plurality of first images and the second image; and wherein the initial virtual position is corresponding to an initial real location in the real environment at which the reality presenting device captures the second image.

### Brief Description of the Drawings

FIG. 1 is a schematic diagram of a reality presenting device according to an embodiment of the present disclosure.
FIG. 2 is an appearance diagram of the reality presenting device shown in FIG. 1.
FIG. 3 is a schematic diagram of a process according to an embodiment of the present disclosure.
FIG. 4 is a schematic diagram of a system according to an embodiment of the present disclosure.

### Detailed Description

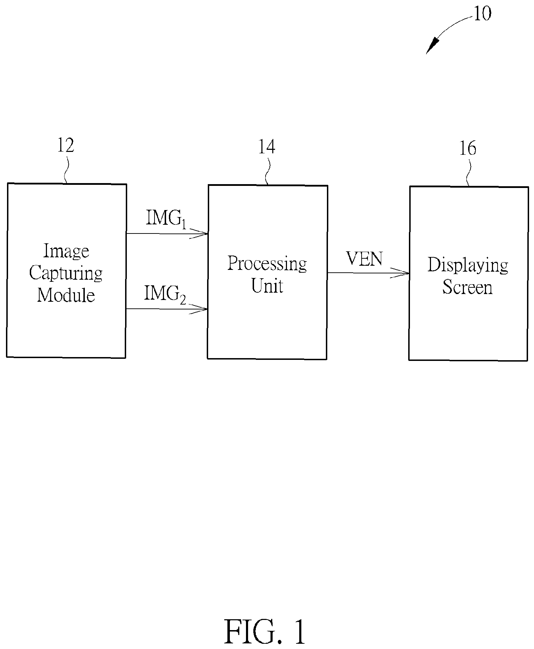

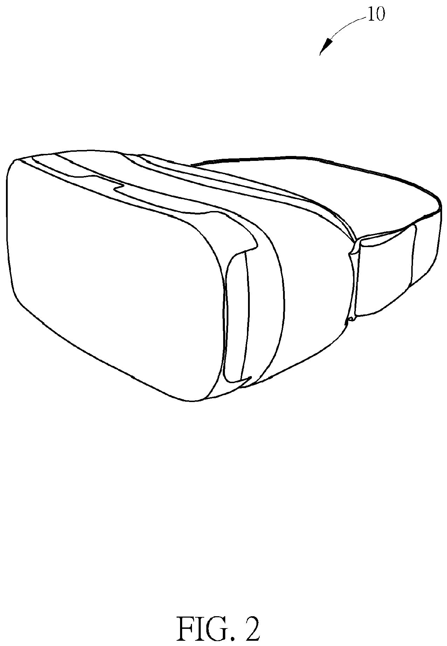

FIG. 1 is a functional block diagram of a reality presenting device 10 according to an embodiment of the present disclosure. FIG. 2 is an illustrative appearance diagram of the reality presenting device 10. The reality presenting device 10 may be a virtual reality (VR) device, an augmented reality (AR) device, a mixed reality (MR) device, or an extended reality (XR) device. Different from the reality presenting devices in the prior art, the reality presenting device 10 is able to compute a virtual position in a virtual environment corresponding to a real location in a real environment, in addition to simply constructing the virtual environment. The reality presenting device 10 comprises an image capturing module 12, a processing unit 14 and a displaying screen 16. The image capturing module 12 may comprise a lens and a light sensing pixel array and is configured to capture images. The images generated by the image capturing module 12 may comprise two dimensional (2D) images, e.g., RGB images, and/or three dimensional (3D) images including depth information, which may be obtained via infrared ray (IR). The processing unit 14 may be, for example, an application processor, a micro-controller, or an application-specific integrated circuit (ASIC), and not limited thereto. The displaying screen is configured to display a reality environment, a virtual environment or a combination thereof to a user/player.

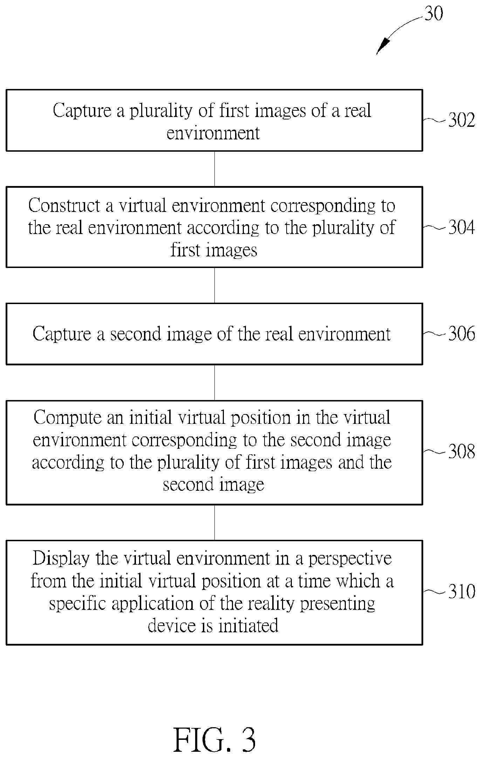

FIG. 3 is a schematic diagram of a process 30 according to an embodiment of the present invention. The process 30 comprises the following steps:
Step 302: Capture a plurality of first images of a real environment.
Step 304: Construct a virtual environment corresponding to the real environment according to the plurality of first images.
Step 306: Capture a second image of the real environment.
Step 308: Compute an initial virtual position in the virtual environment corresponding to the second image according to the plurality of first images and the second image.
Step 310: Display the virtual environment in a perspective from the initial virtual position at a time which a specific application of the reality presenting device is initiated.

In Step 302 and Step 304 (which may be in an off-line stage), the image capturing module 12 captures a plurality of first images IMG₁ from a real environment REN, a virtual environment VEN corresponding to the real environment REN is constructed based on the plurality of first images IMG₁. In an embodiment, the virtual environment VEN may be constructed by the processing unit 14. The real environment REN may be, for example, an office, a living room, a meeting room, and the like, in real life. The virtual environment VEN may comprise a plurality of VR images, e.g., VR 360° images, displayed by the reality presenting device 10, such that when the user/player wears the reality presenting device 10 shown in FIG. 2, the user/player would perceive the plurality of VR images and feel like he/she is immersed in the virtual environment VEN. In another embodiment, all or a part of the plurality of first images IMG₁ can be collected from another source other than the image capturing module 12, for example, a cloud database or the Internet.

In an embodiment, a user/player may walk around the real environment REN and the image capturing module 12 takes various pictures, i.e., the plurality of first images IMG₁, such that the processing unit 14 is able to construct the virtual environment VEN corresponding to the real environment REN according to the plurality of first images IMG₁. In an embodiment, the user/player may stand at a plurality of predefined location in the real environment REN and the image capturing module 12 may take pictures in different perspectives, such that the plurality of first images IMG₁ are captured. And the processing unit 14 is able to construct the virtual environment VEN corresponding to the real environment REN according to the plurality of first images IMG₁. Details of constructing the virtual environment VEN corresponding to the real environment REN, according to the plurality of first images IMG₁ captured from the real environment REN, are known by the art, which is not narrated for brevity.

In Step 306, after the virtual environment VEN is constructed, the image capturing module 12 captures a second image IMG₂ of the real environment REN, which may be in a real-time stage. Step 306 may be executed when/before the user/player starts to enter the virtual environment VEN, e.g., at the time when the user/player turns on (powers on) the reality presenting device 10, or when/before a specific software application, e.g., a game involving virtual reality, is initiated.

In Step 308, an initial virtual position VP_{I} in the virtual environment VEN corresponding to the second image IMG₂ is computed, according to the plurality of first images IMG₁ and the second image IMG₂.

In an embodiment, Step 308 may be executed the processing unit 14.

Details of Step 308 are known by the art. For example, comparing the second image IMG₂ with the plurality of first images IMG₁ may be performed and a plurality of correlation coefficients c of the plurality of first images IMG₁ versus the second image IMG₂ may be obtained.

For example, the plurality of first images IMG₁ may comprise first images IMG_{1,1},..., IMG_{1,N}, and the plurality of correlation coefficients c may comprise correlation coefficients c₁,..., c_{N}. Each correlation coefficient cₙ represents a quantified correlation of the first image IMG_{1,n} and/versus the second image IMG₂. The higher the correlation coefficient cₙ, the more correlation between the first image IMG_{1,n} and the second image IMG₂. That is, the higher the correlation coefficient cₙ indicates that the first image IMG_{1,n} and the second image IMG₂ are more correlated.

Details of obtaining the plurality of correlation coefficients c are not limited. For example, feature extraction operation on the plurality of first images IMG₁ and also on the second image IMG₂ may be performed. Feature extraction operation, known by the art, includes feature identification and appearance number accumulation. For a specific feature, the specific feature may be identified as being complying with a specific geometric shape. Whether the specific feature appears within the image (i.e., feature identification) may be determined and how many times the specific feature appears within the image (i.e., appearance number accumulation) may be further accumulated. The accumulation result is an appearance time or an appearance number of the specific feature. Specifically, determining whether the specific feature appears within the image may be determining whether a part of the image or an image object within the image complies with the specific geometric shape, which may be achieved by using some machine learning or computer vision method. If they do, it is recognized that the specific feature appears once.

In another perspective, feature identification (i.e., to determine whether a certain feature appears within the image) and appearance number accumulation (i.e., to accumulate how many times the certain feature appears within the image) with respect to a plurality of features may be performed, so as to obtain a quantifying vector. The quantifying vector includes a plurality of appearance numbers corresponding to the plurality of features. For example, after performing feature identification and appearance number accumulation on a first feature, a second feature and a third feature on an image, a quantifying vector corresponding to the image may be obtained. The quantifying vector may, for example, be [2, 3, 1]. It means that the first feature appears twice within the image, the second feature appears three times within the image and the first feature appears once within the image. Illustratively, the first feature may comply with a circle shape, the second feature may comply with a triangular shape, and the third feature may comply with a rectangular shape.

Details of the feature extraction operation are known by the art, which is not narrated herein for brevity.

In short, with respect to a plurality of features, e.g., K features, the feature extraction operation may be performed on the plurality of first images IMG₁ to obtain a plurality of first quantifying vector QV₁, which can be done off-line, and perform the feature extraction operation on the second image IMG₂ to obtain a second quantifying vector QV₂, which can be done in real-time.

Specifically, the plurality of first quantifying vector QV₁ may comprise first quantifying vector QV_{1,1},..., QV_{1,n} corresponding to the first images IMG_{1,1},..., IMG_{1,N}, and each first quantifying vector QV_{1,n} comprises a plurality of appearance numbers appn_{n,1},..., appn_{n,K} corresponding to the K features, where an appearance number appn_{n,k} indicates that a feature k appears appn_{n,k} times within the first image IMG_{1,n}. Mathematically, the first quantifying vector QV_{1,n} may be expressed as QV_{1,n} = [appn_{n,1},..., appn_{n,K}].

Similarly, the second quantifying vector QV₂ comprises a plurality of appearance numbers apn₁,..., apn_{K} corresponding to the K features and can be expressed as QV₂ = [apn₁,..., apn_{K}], where the appearance number apnₖ indicates that the feature k appears apnₖ times within the second image IMG₂.

In an embodiment, the correlation coefficients c₁,..., c_{N}, corresponding to the first images IMG_{1,1},..., IMG_{1,N} may be computed. In an embodiment, the correlation coefficient cₙ, between the first image IMG_{1,n} and/versus the second image IMG₂, may be computed as cₙ = (QV_{1,n}^{T}·QV₂) / (|QV_{1,n}|·|QV₂|), where (·)^{T} is the transpose operation and |·| is the norm operation. The larger the correlation coefficient cₙ, the more the first image IMG_{1,n} and the second image IMG₂ are correlated.

In an embodiment, at least a filtered image(s) IMGₖ within the first images IMG_{1,1},..., IMG_{1,N} are selected. The filtered image(s) IMGₖ is/are selected such that at least a filtered correlation coefficient(s) cₖ corresponding to the filtered image(s) IMGₖ is/are greater than a specific threshold TH value (e.g. the correlation coefficient cₖ is greater than 0.8), wherein the filtered image(s) IMGₖ is/are corresponding to at least a virtual position(s) VPₖ in the virtual environment VEN, and the virtual position(s) VPₖ is/are corresponding to at least a real location(s) RLₖ in the real environment REN at which the reality presenting device 10 captures the filtered image(s) IMGₖ.

In addition, one specific filtered image IMGₖ^{*} is selected among the filtered image(s) IMGₖ, and a specific virtual position VPₖ^{*} corresponding to the specific filtered image IMGₖ^{*} is computed. The virtual position VPₖ^{*} is corresponding to a real location RLₖ^{*} in the real environment REN at which the reality presenting device 10 or the image capturing module 12 captures the first image IMGₖ^{*}. Furthermore, a relative virtual position RVPₖ^{*} related to the virtual position VPₖ^{*} (within the virtual position(s) VP^{*)} is computed according to the specific filtered image IMGₖ^{*} (within the filtered image(s) IMG^{*}) and the second image IMG₂. According to the specific filtered image IMGₖ^{*} and the second image IMG₂, the relative virtual position RVPₖ^{*} corresponding to the specific filtered image IMGₖ^{*} is computed. Selecting the specific filtered image IMGₖ^{*} from the filtered image(s) IMGₖ can be achieved by counting and comparing a number of inliers and a number of outliers, and not limited thereto. Computing the relative virtual position RVPₖ^{*} are known by the art, which is not narrated herein for brevity. Therefore, the initial virtual position VP_{I} may be computed as VP_{I} = VPₖ^{*} + RVPₖ^{*}.

In another embodiment, may obtain a filtered image IMGₙ^{*} within the first images IMG_{1,1},..., IMG_{1,N} may be obtained, such that a correlation coefficient cₙ^{*} corresponding to the filtered image IMGₙ^{*} is a maximum correlation coefficient among the correlation coefficients c₁,..., c_{N}. Specifically, after the correlation coefficients c₁,..., c_{N} are computed, the processing unit 14 may perform a sorting operation on the correlation coefficients c₁,..., c_{N} and select a correlation coefficient cₙ^{*} such that the correlation coefficient cₙ^{*} is the maximum of the correlation coefficients c₁,..., c_{N}, i.e., the correlation coefficient cₙ^{*} may be expressed as cₙ^{*} = max (c₁,..., c_{N}). In short, the filtered image IMGₙ^{*} corresponding to the correlation coefficient cₙ^{*} may be obtained, wherein the filtered image IMGₙ^{*} is the most correlated first image versus the second image IMG₂ among the first images IMG_{1,1},..., IMG_{1,N}.

In another perspective, a virtual position VPₙ^{*} in the virtual environment VEN corresponding/according to the first image IMGₙ^{*} may be obtained. The virtual position VPₙ^{*} is corresponding to a real location RLₙ^{*} in the real environment REN at which the reality presenting device 10 or the image capturing module 12 captures the first image IMGₙ^{*}. The method of the processing unit 14 obtaining the virtual position VPₙ^{*} is not limited. In an embodiment, the user/player may stand at a pre-defined real location RL' and a virtual position VP' corresponding to the real location RL' may be computed. If an first image IMG' captured at the real location RL' is the first image correlated to the second image IMG₂ most, then the virtual position VPₙ^{*} is obtained as the virtual position VP'.

An initial virtual position VP_{I} in the virtual environment VEN corresponding to the second image IMG₂ may be computed, according to the first image IMGₙ^{*} and the second image IMG₂. The method of computing the initial virtual position VP_{I} is not limited. In an embodiment, a relative virtual position RVP related to the virtual position VPₙ^{*} may be computed according to the first image IMGₙ^{*} and the second image IMG₂, and compute the initial virtual position VP_{I} according to the virtual position VPₙ^{*} and the relative virtual position RVP. Suppose that the virtual position VPₙ^{*}, the relative virtual position RVP and the initial virtual position VP_{I} are expressed in vector form, representing coordinates in a 2D space, the initial virtual position VP_{I} may be expressed as VP_{I} = VPₙ^{*} + RVP.

In other words, wherever the user/player locates at in the real environment REN, the reality presenting device 10 is able to obtain the virtual position in the virtual environment VEN corresponding to the real location in the real environment REN.

In an embodiment of the user/player playing a game involving the virtual environment VEN corresponding to the real environment REN, the user/player can power on the reality presenting device 10 at any place in the real environment REN, and the processing unit 14 would compute the initial virtual position VP_{I} corresponding to the real location RL at which the user/player and the reality presenting device 10 locate. The reality presenting device 10 may generate VR 360° image(s) according to the initial virtual position VP_{I}, such that the user/player would see the perspective from the initial virtual position VP_{I} in the virtual environment VEN, which is similar to (or the same as) the perspective from the real location RL in the real environment REN.

In Step 310, the displaying screen 16 displays the virtual environment VEN, at the time the user/player initiated the specific software application, in a perspective from the initial virtual position VP_{I}. The specific software application may be a game involving virtual reality. In other words, the displaying screen 16 may display the plurality of VR images corresponding to the virtual environment VEN which is in the perspective of the initial virtual position VP_{I}. The initial virtual position VP_{I} is corresponding to a real location RL_{I} in the real environment REN at which the reality presenting device 10 or the image capturing module 12 captures the second image IMG₂. At the time the user/player initiated the specific software application, the user/player would perceive the plurality of VR images of the virtual environment VEN, the user/player is immersed in the virtual environment VEN, and experience the virtual environment VEN just like he/she is at the real location RL_{I} in the real environment REN.

By performing the process 30, there is no significant difference between the virtual environment VEN and the real environment REN experienced by the user/player. Hence, a sense of immersion experienced by user/player is further enhanced.

Notably, the embodiments stated in the above are utilized for illustrating the concept of the present invention. Those skilled in the art may make modifications and alterations accordingly, and not limited herein. For example, the process 30 may be simply executed by the reality presenting device 10. That is, Step 304 and Step 308 may be executed by the processing unit 14 of the reality presenting device 10, which is not limited therein. The process 30 may be executed by a system.

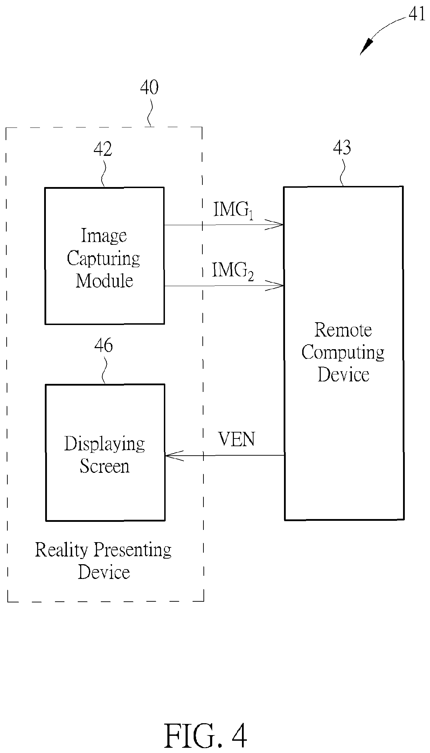

FIG. 4 is a schematic diagram of a system 41 according to an embodiment of the present disclosure. The system 41 comprises a reality presenting device 40 and a remote computing device 43. The reality presenting device 40 and the remote computing device 43 may be connected through a wireless connection or a wireless interface. The reality presenting device 40 comprises an image capturing module 42 and a displaying screen 46. The remote computing device 43 may be a cloud computing device, an edge computing device, or a combination of the cloud computing device and the edge computing device, wherein the cloud computing device and the edge computing device may be a computer cluster or a server. The process 30 may be executed by the system 41, where Step 302 and Step 306 may be executed by the image capturing module 42, Step 304 and Step 308 may be executed by the remote computing device 43, and Step 310 may be executed by displaying screen 46, which is also within the scope of the present disclosure.

In summary, the present disclosure is able to compute the initial virtual position corresponding to the real location at which the user/player and the reality presenting device locate. Compared to the prior art, the user/player may initiate the game involving the virtual environment at any real location in the real environment. No significant difference between the virtual environment VEN and the real environment REN experienced by the user/player. Hence, the sense of immersion experienced by user/player is further enhanced.

## Claims

1. A positioning method (30), **characterized by** comprising:
collecting a plurality of first images (IMG₁) of a real environment (302) and constructing a virtual environment (VEN) corresponding to the real environment according to the plurality of first images (304);
obtaining, by a reality presenting device (10), a second image (IMG₂) of the real environment (306);
computing an initial virtual position in the virtual environment corresponding to the second image according to the plurality of first images and the second image (308); and
displaying, by the reality presenting device (10), the virtual environment in a perspective from the initial virtual position at a time which a specific application of the reality presenting device is initiated (310);
wherein the initial virtual position is corresponding to an initial real location in the real environment at which the reality presenting device captures the second image.

2. A reality presenting device (10) capable of displaying a virtual environment (VEN) to a user, wherein the virtual environment is constructed based on a plurality of first images (IMG₁) captured from a real environment, **characterized in that** the reality presenting device comprises:
an image capturing module (12), configured to capture a second image (IMG₂) from the real environment (306);
a processing unit (14), configured to perform the following steps:
constructing the virtual environment corresponding to the real environment according to the plurality of first images (304); and
computing an initial virtual position in the virtual environment corresponding to the second image according to the plurality of first images and the second image (308); and
a displaying screen (16), configured to display the virtual environment in a perspective from the initial virtual position at a time which a specific application of the reality presenting device is initiated (310);
wherein the initial virtual position is corresponding to an initial real location in the real environment at which the reality presenting device captures the second image.

3. A system (41) capable of displaying a virtual environment (VEN) to a user, wherein the virtual environment is constructed based on a plurality of first images (IMG₁) captured from a real environment, **characterized in that** the system comprises:
a reality presenting device (40), comprising:
an image capturing module (42), configured to capture a second image (IMG₂) from the real environment (306); and
a displaying screen (46), configured to display the virtual environment in a perspective from an initial virtual position at a time which a specific application of the reality presenting device is initiated (310); and
a remote computing device (43), configured to perform the following steps:
constructing the virtual environment corresponding to the real environment according to the plurality of first images (304); and
computing the initial virtual position in the virtual environment corresponding to the second image according to the plurality of first images and the second image (308); and
wherein the initial virtual position is corresponding to an initial real location in the real environment at which the reality presenting device captures the second image.

4. The positioning method (30) of claim 1, the reality presenting device (10) of claim 2 or the system (41) of claim 3, **characterized by** further comprising:
comparing the second image with the plurality of first images and obtaining a plurality of correlation coefficients of the plurality of first images versus the second image;
obtaining at least a filtered image within the plurality of first images, such that at least a filtered correlation coefficient corresponding to the at least a filtered image are greater than a specific threshold, wherein the at least a filtered image is corresponding to at least a virtual position in the virtual environment, and the at least a virtual position is corresponding to at least a real locations in the real environment at which the reality presenting device captures the at least a filtered image; and
computing the initial virtual position according to the at least a filtered image and the second image.

5. The positioning method (30) of claim 4, the reality presenting device (10) of claim 2 or the system (41) of claim 3, **characterized in that** the step of comparing the second image with the plurality of first images and obtaining the plurality of correlation coefficients of the plurality of first images versus the second image comprises:
obtaining a plurality of first quantifying vectors corresponding to the plurality of first images;
obtaining a second quantifying vector corresponding to the second image;
computing a plurality of first correlation coefficients of the plurality of first quantifying vectors versus the second quantifying vector; and
obtaining the plurality of correlation coefficients as the plurality of first correlation coefficients.

6. The positioning method (30) of claim 5, the reality presenting device (10) of claim 2 or the system (41) of claim 3, **characterized in that** the step of obtaining the plurality of first quantifying vectors corresponding to the plurality of first images comprises:
performing a feature extraction operation on the plurality of first images to obtain the plurality of first quantifying vectors;
wherein a quantifying vector corresponding to a first image within the plurality of first images indicates a plurality of appearance numbers corresponding to a plurality of features within the first image.

7. The positioning method (30) of claim 5, the reality presenting device (10) of claim 2 or the system (41) of claim 3, **characterized in that** the step of obtaining the second quantifying vector corresponding to the second image comprises:
performing a feature extraction operation on the second image to obtain the second quantifying vector;
wherein the second quantifying vector indicates a plurality of appearance numbers corresponding to a plurality of features within the second image.

8. The positioning method (30) of claim 4, the reality presenting device of claim 2 or the system (41) of claim 3, **characterized in that** the step of computing the initial virtual position corresponding to the second image in the virtual environment according to the at least a filtered images and the second image comprises:
computing a relative virtual position related to a virtual position within the at least a virtual position according to the at least a filtered image and the second image; and
computing the initial virtual position corresponding to the second image according to the virtual position and the relative virtual position.
